# EUROPEAN PATENT SPECIFICATION

(11) **EP 2 542 005 B1**
(45) Date of publication and mention of the grant of the patent: **30.10.2013**
(21) Application number: 11305837.4
(22) Date of filing: 30.06.2011
(51) Int. Cl.: H04W 72/12, H04W 72/14

(54) **A method for signalling allocations of subframes, a base station and a user terminal therefor**
Verfahren zur Signalisierung von Zuweisungen von Unterrahmen, Basisstation und Benutzerendgerät dafür
Procédé pour les affectations de signalisation de sous-trames, station de base et terminal utilisateur correspondant

(43) Date of publication of application: 02.01.2013
(73) Proprietor: Alcatel Lucent, 75007 Paris (FR)
(72) Inventor: Stanze, Oliver, 70499 Stuttgart (DE); Gerlach, Christian, 71254 Ditzingen (DE); Weber, Andreas, 74251 Lehrensteinsfeld (DE)
(74) Representative: Kleinbub, Oliver

(56) References cited:
- EP-A1- 2 296 408
- US-A1- 2011 044 261
- LG ELECTRONICS: "Un UL subframe configuration", 3GPP DRAFT; R1-110887 UN UL SUBFRAME CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Taipei, Taiwan; 20110221, 15 February 2011 (2011-02-15), XP050490649, [retrieved on 2011-02-15]

## Description

### Field of the invention

The invention relates to a method for signalling in physical downlink control channels in subframes from a base station to user terminals allocations of subframes for transmission in uplink from the user terminals to the base station, and a base station and a user terminal adapted to perform said method.

### Background

In cellular communication networks using standards like e.g. Third Generation Partnership Project Long Term Evolution (3GPP LTE) standard, the concept of so-called enhanced inter-cell interference-coordination (eICIC) is introduced. In case of eICIC, a base station, as e.g. a macro, pico or femto base station, sends so-called almost blank subframes (ABS) in downlink, where data channels, as e.g. a physical downlink shared channel (PDSCH), or control channels, as e.g. a physical downlink control channel (PDCCH), are either not sent or only sent with a significant reduced transmission power. This can also be realized by means of so-called multicast broadcast single frequency network (MBSFN) subframes that in general are used for multicast and broadcast transmissions. In the following multicast broadcast single frequency network (MBSFN) subframes should also be covered by the term almost blank subframes (ABS). This leads to a reduced interference on downlink data and control channels in neighboring cells, as e.g. macro, pico or femto cells.

E.g. in 3GPP LTE, the signalling of allocations in certain uplink subframes needs to be done in predefined downlink subframes, and e.g. in an LTE FDD system (FDD = Frequency Division Duplex), a physical downlink control channel (PDCCH) in subframe n contains the signalling for resource allocations in downlink subframe n and for resource allocations in uplink subframe n+4. In case of an almost blank subframe in downlink, there is either no physical downlink control channel (PDCCH) or, if control and data channels are sent with a significant reduced transmission power, the capacity is severely limited. So, the introduction of almost blank subframes in downlink automatically leads to the introduction of unused or almost unused uplink subframes 4 subframes later.

If an LTE base station sends an almost blank subframe in downlink subframe n, the current LTE standard only enables the transmission of two kinds of messages on the physical uplink shared channel (PUSCH) in uplink subframe n+4. The first kind of messages are synchronous HARQ retransmissions (HARQ = hybrid automatic repeat request), which are indicated on a physical HARQ indicator channel (PHICH), and the second kind of messages are semi-persistent scheduled data, with the respective radio resources being semi-statically configured and allocated to a user terminal for a longer time period than one subframe, avoiding the need for uplink grant messages over a physical downlink control channel (PDCCH) for each subframe.

These two types of messages do not require any explicit uplink grant in downlink subframe n in order to be transmitted in uplink subframe n+4. Of these two messages, the semi-persistent scheduled data are the only messages which can be planned for the usage of uplink resources 4 subframes after an almost blank subframe (ABS). The usage of semi-persistent scheduling is restricted to a limited number of applications with constant traffic demands, e.g. Voice over IP (VoIP). Therefore, it can be assumed that only a fraction of the uplink resources are used 4 subframes after an almost blank subframe (ABS).

### Summary

The object of the invention is thus to propose a method for dynamic scheduling by means of uplink grant messages for the allocation of uplink transmission resources, said allocation being valid for specific single uplink subframes, with an increased flexibility of the scheduling, allowing e.g. in LTE the usage of uplink resources 4 subframes after an almost blank subframe (ABS) in downlink.

In the US patent application publication US 2011/0044261 Al, a method is disclosed for configuring an offset between a PDSCH transmission and its corresponding PDCCH grant. It is furthermore disclosed, that the offset may be dynamically or semi-statically configured via high layer signalling, and that the offset may be e.g. a fraction of a subframe, a single subframe or multiple subframes. It is also disclosed, that PDSCH allocations that cover multiple subframes can be included in a single PDCCH.

The basic idea of the invention is to enable that a physical downlink control channel (PDCCH) in downlink subframe n not only contains uplink grants for e.g. subframe n+4 but also for subframe n+4+k, with k >= 0. This enables e.g. to schedule transmission resources in uplink subframe n+4, although downlink subframe n was an almost blank subframe (ABS). The definition of the respective subframes n+4+k for uplink can be done by a fixed rule, by higher layer signalling e.g. on an RRC layer (RRC = radio resource control), or by modifying the physical downlink control channel (PDCCH) signalling.

In an embodiment of the invention, downlink subframe n only contains uplink grants for only one subframe n+4+k, with k > 0, e.g. in case that uplink subframe n+4 is completely used for persistent scheduling and/or HARQ retransmissions. As in 3GPP LTE, allocations of only one uplink subframe are signaled in this embodiment. However, in 3GPP LTE, the uplink subframe is predefined as 4 subframes after the downlink subframe, whereas according to the embodiment of the invention, the subframe n+4+k which is used for transmission in uplink is explicitly signaled from the base station.

The invention leads to an increase of the uplink capacity which is almost linearly depending on the number of configured almost blank subframes (ABS), e.g. if 2 out of 10 subframes are configured as almost blank subframes (ABS), the described approach would increase the uplink capacity by the capacity of 2 additional, previously unused, subframes per 10 subframes, if HARQ retransmissions and semi-persistent scheduling is ignored.

The object is thus achieved by a method for signalling in physical downlink control channels in subframes from a base station to user terminals allocations of transmission resources of subframes for transmission in uplink from the user terminals to the base station, according to claim 1. In an embodiment of the invention, each of said at least one of said user terminals uses transmission resources of only one of said at least one signaled subframe for transmission in uplink. However, in a further embodiment of the invention, each of said at least one of said user terminals uses transmission resources of at least two of said at least one signaled subframe for transmission in uplink. Furthermore, also combinations of said embodiments are possible, i.e. some of said user terminals use transmission resources of only one of said at least one signaled subframe for transmission in uplink, and some of said user terminals use transmission resources of at least two of said at least one signaled subframe for transmission in uplink.

The object is furthermore achieved by a base station according to claim 11.

The object is furthermore achieved by a user terminal according to claim 12 and a communication network according to claim 13.

The invention is described in the following within the framework of 3GPP LTE, however as the invention is not restricted to 3GPP LTE, but can in principle be applied in other networks that are appropriate for wireless communication, like e.g. in WiMAX networks (WiMAX = Worldwide Interoperability for Microwave Access), in the following, instead of the term eNodeB used in LTE, the more general term base station is used.

Further developments of the invention can be gathered from the dependent claims and the following description.

### Brief description of the figures

In the following the invention will be explained further making reference to the attached drawings.
Fig. 1 schematically shows a communication network in which the invention can be implemented.
Fig. 2 schematically shows the structure of a user terminal and a base station in which the invention can be implemented.
Fig. 3 schematically shows exemplarily a method for signalling of uplink grants according to the prior art.
Fig. 4 schematically shows exemplarily a method for signalling of uplink grants according to an embodiment of the invention.

### Description of the embodiments

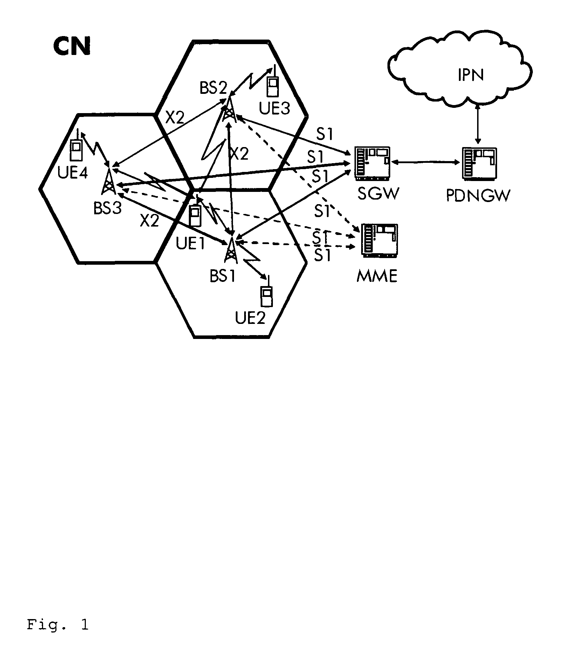

Fig. 1 shows as an example of a communication network in which the invention can be implemented a communication network CN according to the standard 3GPP LTE.

Said communication network CN comprises base stations BS1-BS3, user terminals UE1-UE4, a serving gateway SGW, a packet data network gateway PDNGW, and a mobility management entity MME.

Each of said user terminals UE1-UE4 is connected via radio connections to one or multiple of said base stations BS1-BS3, which is symbolized by flashes in fig. 1. The base stations BS1-BS3 are in turn connected to the serving gateway SGW and to the mobility management entity MME, i.e. to the evolved packet core (EPC), via the so-called S1 interface.

The base stations BS1-BS3 are connected among each other via the so-called X2 interface.

The serving gateway SGW is connected to the packet data network gateway PDNGW, which is in turn connected to an external IP network IPN.

The S1 interface is a standardized interface between a base station BS1-BS3, i.e. a eNodeB in this example, and the Evolved Packet Core (EPC). The S1 interface has two flavours, S1-MME for exchange of signalling messages between the base station BS1-BS3 and the mobility management entity MME and S1-U for the transport of user datagrams between the base station BS1-BS3 and the serving gateway SGW.

The X2 interface is added in 3GPP LTE standard primarily in order to transfer the user plane signal and the control plane signal during handover.

The serving gateway SGW performs routing of the IP user data between the base station BS1-BS3 and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal (UE1-UE4) and the respective serving base station (BS1-BS3).

The mobility management entity MME performs tasks of the subscriber management and the session management, and also performs the mobility management during handover between different access networks.

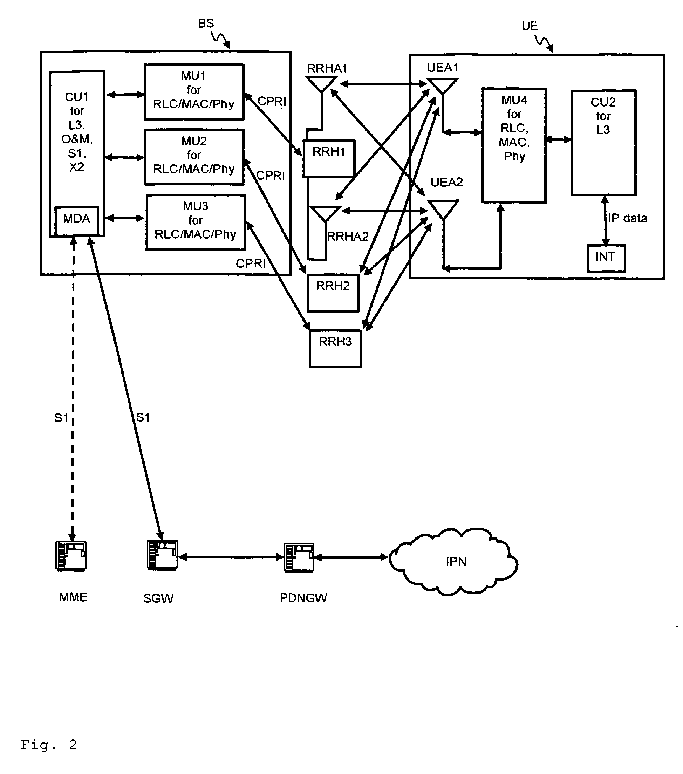

Fig. 2 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and to a respective remote radio head RRH1, RRH2, or RRH3 via a so-called Common Public Radio Interface (CPRI).

Each of the remote radio heads RRH1, RRH2, and RRH3 is connected by way of example to two remote radio head antennas RRHA1 and RRHA2 for transmission and reception of data via a radio interface. Said two remote radio head antennas RRHA1 and RRHA2 are only depicted for the remote radio head RRH1 in fig. 2 for the sake of simplicity.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The remote radio heads RRH1, RRH2, and RRH3 comprise the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity of different media like e.g. video streaming or web browsing.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Automatic Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 over the Common Public Radio Interface to the respective remote radio head RRH1, RRH2, or RRH3, and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH1, RRH2, and RRH3 preferably via lossless fibre links that carry the CPRI data. This architecture reduces costs for service providers because only the remote radio heads RRH1, RRH2, and RRH3 containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Automatic Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

In the sequel, a method for signalling of uplink grants is described according to the prior art and embodiments of the invention.

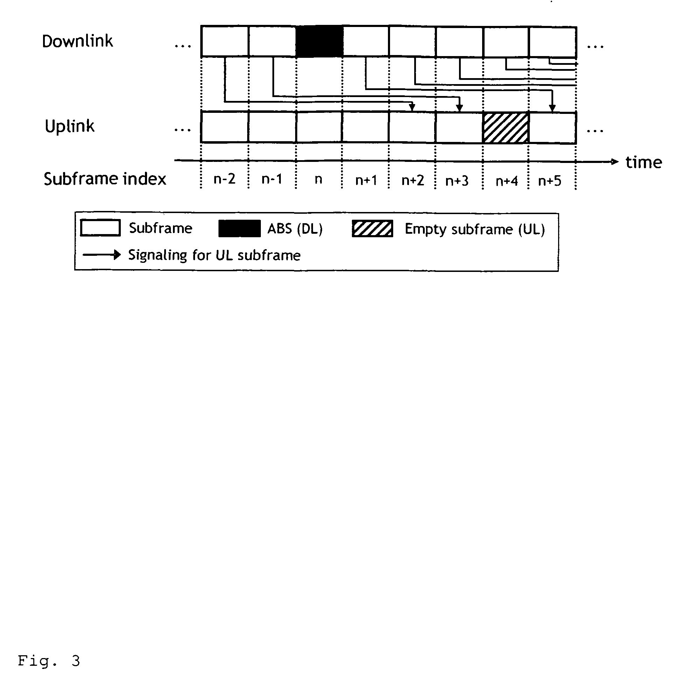

Fig. 3 schematically shows exemplarily a method for signalling of uplink grants according to the prior art.

In the upper row in fig. 3, subframes n-2 to n+5 used for downlink transmission are depicted.

In the lower row in fig. 3, subframes n-2 to n+5 used for uplink transmission are depicted.

For LTE applying frequency division duplex (FDD), an uplink grant received in a downlink subframe applies to an uplink subframe 4 subframes later, i.e. downlink subframe n-2 comprises an uplink grant for uplink subframe n+2, downlink subframe n-1 comprises an uplink grant for uplink subframe n+3 and so on, which is indicated by arrows in fig. 3.

Downlink subframe n in fig. 3 is a so-called almost blank subframe (ABS), in which data channels or control channels are either not sent or only sent with a significant reduced transmission power. Thus, no uplink grant for uplink subframe n+4 is comprised in downlink subframe n, and thus, the uplink subframe n+4 is empty except for synchronous HARQ retransmissions and semi-persistent scheduled data as described above, which leads to a reduced uplink capacity.

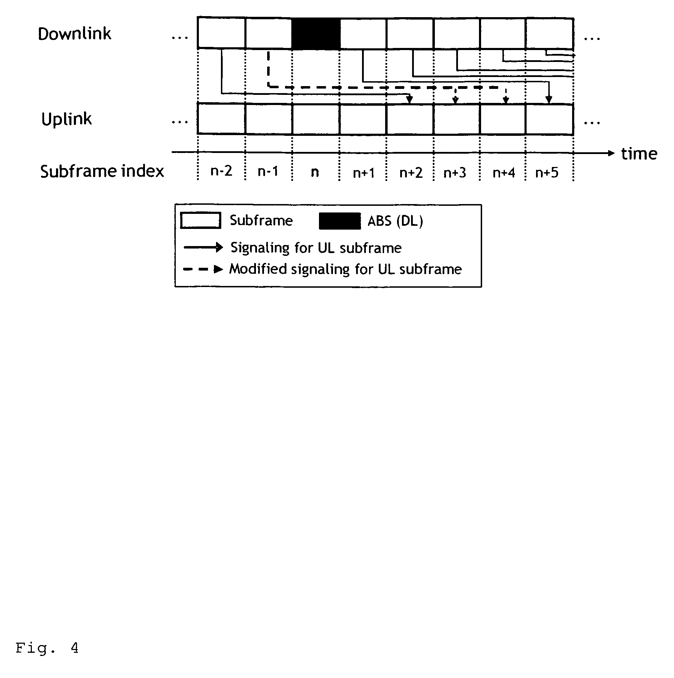

Fig. 4 schematically shows exemplarily a method for signalling of uplink grants according to an embodiment of the invention.

In the upper row in fig. 4, subframes n-2 to n+5 used for downlink transmission are depicted.

In the lower row in fig. 4, subframes n-2 to n+5 used for uplink transmission are depicted.

For LTE applying frequency division duplex (FDD), an uplink grant received in a downlink subframe can apply to an uplink subframe 4 subframes later, e.g. downlink subframe n-2 comprises an uplink grant for uplink subframe n+2, which is indicated by solid arrows in fig. 4, and which is similar to the situation according to the prior art as depicted in fig. 3 and described above.

However, according to an embodiment of the invention, an uplink grant received in a downlink subframe can apply not only to an uplink subframe 4 subframes later, but also to an uplink subframe 4+k subframes later. In fig. 4, e.g. downlink subframe n-1 comprises not only an uplink grant for uplink subframe n+3, but also an uplink grant for uplink subframe n+4, which is indicated by dashed arrows in fig. 4.

As downlink subframe n in fig. 4 is a so-called almost blank subframe (ABS), in which data channels or control channels are either not sent or only sent with a significant reduced transmission power, no uplink grant for uplink subframe n+4 is comprised in downlink subframe n, if signalling is performed according to the prior art, and thus, the uplink subframe n+4 is empty except for synchronous HARQ retransmissions and semi-persistent scheduled data as described above, which leads to a reduced uplink capacity.

By applying the invention, an uplink grant received in downlink subframe n-1 applies not only to an uplink subframe 4 subframes later, but also to an uplink subframe 4+k subframes later. Thus, in case of e.g. k=1, downlink subframe n-1 can comprise not only an uplink grant for uplink subframe n+3, but also an uplink grant for uplink subframe n+4, and uplink subframe n+4 can thus be used for dynamic uplink transmission, which leads to an increased uplink capacity.

In an embodiment of the invention, downlink subframe n-1 only contains uplink grants for only one uplink subframe 4+k subframes later, with k > 0, e.g. in case that uplink subframe n+3 is completely used for persistent scheduling and/or HARQ retransmissions.

More generally, according to further embodiments of the invention, an uplink grant received in a downlink subframe can also apply to multiple uplink subframes, i.e. allocations of transmission resources of multiple subframes for transmission in uplink are comprised.

Allocations of transmission resources of subframes for transmission in uplink, which are signalled in downlink in an uplink grant, comprise e.g. resource block allocations, modulation and coding schemes, transmit power control for physical uplink shared channels, or identities of the user terminals for which the signalling in the physical downlink control channels is intended.

According to a preferred embodiment of the invention, the principle of the invention that an uplink grant received in a downlink subframe can apply not only to an uplink subframe 4 subframes later, but also to an uplink subframe 4+k subframes later, is applied if at least one downlink subframe is used in which control channels are either not sent or only sent with a significant reduced transmission power, as e.g. an almost blank subframe.

The subframes for which an uplink grant received in a downlink subframe applies to, as e.g. uplink subframes n+3 and n+4 in fig. 4, must be known to the respective user terminals for which the uplink grant is intended. Thus, a definition of said at least two subframes n+3 and n+4 is performed by means of a predefined rule known to the user terminals, downlink signalling on a radio resource control layer, or physical downlink control channel signalling. The physical downlink control channel signalling can e.g. comprise a field used for definition of at least one of said at least two subframes n+3 and n+4. Said field can e.g. be a redefined optional field used for definition of at least one of said at least two subframes n+3 and n+4.

In order to implement the invention, in an embodiment of the invention for an LTE system, the so-called downlink control information DCI 0, which is used to signal uplink allocations of transmission resources, has to comprise a field which indicates that a downlink control information DCI 0 in downlink subframe n is not related to an uplink allocation of transmission resources in subframe n+4 but to subframe n+4+k (k >= 0). So, it is required to signal the value k in the downlink control information DCI 0. Based on this additional information in the downlink control information DCI 0, it is possible to signal uplink allocations of transmission resources for subframe n+4, even if subframe n is an almost blank subframe (ABS).

Different approaches are possible to include k in the downlink control information DCI 0:

The first possibility is the definition of a new separate field, which contains k. The definition of a separate field provides the highest degree of freedom to cope with different almost blank subframe patterns.

The second possibility is the redefinition of existing optional fields to contain k. By using this approach, the downlink control information DCI 0 is kept unchanged, but the meaning of optional fields is changed. The flexibility of this approach is defined by the current meaning of the respective optional field and its size. Possible optional fields which might contain k are:
First, the so-called carrier indicator field (CIF) with a size of 3 bits that identify particular carriers in a system that utilizes multiple carriers. This field might be reused in case of a single carrier solution and would enable to signal 0<=k<=7.
Second, the so-called uplink subframe index field with a size of 2 bits that indicate the uplink subframe index in time direction. This field is currently only available in case of downlink control information format DCI 0 in time division duplex (TDD) configuration. The redefinition of this field would enable to signal 0<=k<=3 and would mean that downlink control information format DCI 0 is changed for frequency division duplex (FDD) configuration.

The load on a physical downlink control channel (PDCCH) is increased, if it contains the signalling of uplink allocations for more than a single uplink subframe. Therefore, e.g. the usage of the modified downlink control information format DCI 0 described above might be combined with a scheduling which improves the physical downlink control channel (PDCCH) load. This can be realized, if a base station preferably schedules user terminals with good channel conditions, i.e. with a good wideband channel quality indicator (CQI), to downlink subframes in which uplink allocations relating to more than a single uplink subframe are signaled. For user terminals with good channel conditions, a low aggregation level might be used on the physical downlink control channel (PDCCH). So, preferring user terminals with good channel conditions increases the total number of DCI messages which might be placed on the physical downlink control channel (PDCCH) of a certain downlink subframe.

In an embodiment of the invention, for each physical downlink control channel (PDCCH) only allocations for transmission in uplink related to a specific subframe is contained.

In another embodiment of the invention, this could be changed and e.g. two allocations for transmission in uplink for two different uplink subframes could be allowed in a single physical downlink control channel (PDCCH).

## Claims

1. A method for signalling in physical downlink control channels in subframes (n-2...n+1) from a base station (BS1) to user terminals (UE1, UE2) allocations of transmission resources of subframes (n+2...n+5) for transmission in uplink from the user terminals (UE1, UE2) to the base station (BS1), the allocations being valid for specific single subframes, wherein in at least one physical downlink control channel in a single subframe (n-1), the base station (BS1) signals allocations of at least one signaled subframe (n+3, n+4) for transmission in uplink from at least one of said user terminals (UE1, UE2) to the base station (BS1), **characterized in, that**
• said allocations are signaled in the at least one physical downlink control channel in said single subframe (n-1), if at least one almost blank subframe (n) is used in downlink,
• and a definition of said at least one signaled subframe (n+3, n+4) is performed by means of at least one number indicating the distance between said at least one signaled subframe (n+3, n+4) and a default subframe location.

2. A method according to claim 1, wherein said signaled allocations comprise at least one of a group of resource block allocations, modulation and coding schemes, transmit power control for physical uplink shared channels, and identities of the user terminals (UE1, UE2) for which the signalling in the physical downlink control channels is intended.

3. A method according to claim 1, wherein a definition of said at least one signaled subframe (n+3, n+4) is performed by means of at least one of a group of a predefined rule known to the user terminals (UE1, UE2), downlink signalling on a radio resource control layer, and physical downlink control channel signalling.

4. A method according to claim 3, wherein the physical downlink control channel signalling comprises a field used for definition of at least one of said at least one signaled subframe (n+3, n+4).

5. A method according to claim 4, wherein said field is a redefined optional field used for definition of at least one of said at least one signaled subframe (n+3, n+4).

6. A method according to claim 4 or 5, wherein the physical downlink control channel signalling is performed by using a downlink control information message of format DCI 0.

7. A method according to claim 5, wherein said redefined optional field is one of a group of a carrier indicator field and an uplink subframe index field.

8. A method according to any of the preceding claims, wherein at least two of said user terminals (UE1, UE2) are scheduled in an order of an aggregation level of said at least two of said user terminals (UE1, UE2).

9. A method according to any of the preceding claims, wherein in each of the at least one physical downlink control channel an allocation of only one of said at least one signaled subframe (n+3, n+4) for transmission in uplink is comprised.

10. A method according to any of the claims 1 to 8,
wherein in at least one of the at least one physical downlink control channel allocations of at least two of said at least one signaled subframe (n+3, n+4) for transmission in uplink are comprised.

11. A base station (BS1) for signalling in physical downlink control channels in subframes (n-2...n+1) from the base station (BS1) to user terminals (UE1, UE2) allocations of subframes (n+2...n+5) for transmission in uplink from the user terminals (UE1, UE2) to the base station (BS1), the allocations being valid for specific single subframes, wherein the base station (BS1) comprises at least one processing means which is adapted to signal in at least one physical downlink control channel in a single subframe (n-1) allocations of at least one signaled subframe (n+3, n+4) for transmission in uplink from at least one of said user terminals (UE1, UE2) to the base station (BS1), **characterized in, that** said at least one processing means is adapted to
• signal said allocations in the at least one physical downlink control channel in said single subframe (n-1), if at least one almost blank subframe (n) is used in downlink,
• and perform a definition of said at least one signaled subframe (n+3, n+4) by means of at least one number indicating the distance between said at least one signaled subframe (n+3, n+4) and a default subframe location.

12. A user terminal (UE1, UE2) for receiving in physical downlink control channels in subframes (n-2...n+1) from a base station (BS1) to the user terminal (UE1, UE2) signalling of allocations of subframes (n+2...n+5) for transmission in uplink from the user terminal (UE1, UE2) to the base station (BS1), the allocations being valid for specific single subframes, wherein the user terminal (UE1, UE2) comprises at least one processing means which is adapted to receive in at least one physical downlink control channel in a single subframe (n-1) allocations of at least one signaled subframe for transmission in uplink from the user terminal (UE1, UE2) to the base station (BS1), **characterized in, that** said at least one processing means is adapted to
• receive said allocations in the at least one physical downlink control channel in said single subframe (n-1), if at least one almost blank subframe (n) is used in downlink,
• and perform a definition of said at least one signaled subframe (n+3, n+4) by means of at least one number indicating the distance between said at least one signaled subframe (n+3, n+4) and a default subframe location.

13. A communication network (CN) comprising at least one base station (BS1) according to claim 11, and at least one user terminal (UE1, UE2) according to claim 12.

## Patentansprüche

1. Verfahren zur Signalisierung, in physischen Downlink-Steuerkanälen in Unterrahmen (n-2...n+1) von einer Basisstation (BS1) an Benutzerendgeräte (UE1, UE2), von Zuweisungen von Übertragungsressourcen von Unterrahmen (n+2...n+5) für die Uplink-Übertragung von den Benutzerendgeräten (UE1, UE2) an die Basisstation (BS1), wobei die Zuweisungen für spezifische einzelne Unterrahmen gültig sind, wobei die Basisstation (BS1) in mindestens einem physischen Downlink-Steuerkanal in einem einzelnen Unterrahmen (n-1) Zuweisungen von mindestens einem signalisierten Unterrahmen (n+3, n+4) für die Uplink-Übenragung von mindestens einem der besagten Benutzerendgeräte (UE1, UE2) an die Basisstation (BS1) signalisiert, **dadurch gekennzeichnet, dass**
• die besagten Zuweisungen in dem mindestens einen physischen Downlink-Steuerkanal in dem besagten einzelnen Unterrahmen (n-1) signalisiert werden, wenn mindestens ein fast leerer Unterrahmen (n) in der Downlink-Übertragung verwendet wird,
• und eine Definition des besagten mindestens einen signalisierten Unterrahmens (n+3, n+4) anhand mindestens einer Zahl durchgeführt wirt, welche die Distanz wischen dem besagten mindestens einen signalisieren Unterrahmen (n+3, n+4) und einer vorgegebenen Unterrahmen-Position.

2. Verfahren nach Anspruch 1, wobei die besagten signalisierten Zuweisungen mindestens eine Zuweisung aus einer Gruppe bestehend aus Ressourcenblockzuweisungen, Modulations- und Codierungsschemen, Sendeleistungssteuerung für gemeinsam benutzte physische Uplink-Kanäle und Kennungen der Benutzerendgeräte (UE1, UE2), für welches die Signalisierung in den physischen Downlink-Steuerkanälen bestimmt ist, umfassen.

3. Verfahren nach Anspruch 1, wobei eine Definition des besagten mindestens einen signalisierten Unterrahmens (n+3, n+4) anhand mindestens eines Kriteriums aus einer Gruppe bestehend aus einer vordefinierten Regel, welche den Benutzerendgeräten (UE1, UE2) bekannt ist, einer Downlink-Signalisierung auf einer Funkressourcen-Steuerschicht und einer Signalisierung in einem physischen Downlink-Steuerkanal durchgeführt wird.

4. Verfahren nach Anspruch 3, wobei die Signalisierung auf dem physischen Downlink-Steuerkanal ein Feld umfasst, welches für die Definition mindestens eines der besagten mindestens ein signalisierten Unterrahmen (n+3, n+4) verwendet wird.

5. Verfahren nach Anspruch 4, wobei das besagte Feld ein neu definiertes optionales Feld ist, welches für die Definition mindestens eines der besagten mindestens ein signalisieren Unterrahmen (n+3, n+4) verwendet wird.

6. Verfahren nach Anspruch 4 oder 5, wobei die Signalisierung in dem physischen Downlink-Steuerkanal unter Verwendung einer Downlink-Steuerinformationsnachricht im Format DCl 0 durchgeführt wird.

7. Verfahren nach Anspruch 5, wobei das besagte neu definierte optionale Feld eines aus einer Gruppe bestehend aus Träger-Indikatorfeld und Uplink-Unterrahmenindexfeld ist.

8. Verfahren nach einem beliebigen der vorstehenden Ansprüche, wobei mindestens zwei der besagten Benutzerendgeräte (UE1, UE2) in einer Reihenfolge eines Aggregationszustands der besagten mindestens zwei der besagten Benutzerendgeräte (UE1, UE2) geplant werden.

9. Verfahren nach einem beliebigen der vorstehenden Ansprüche, wobei in einem jeden der mindestens ein physischen Downlink-Steuerkanäle eine Zuweisung von nur einem der besagten mindestens ein signalisierten Unterrahmen (n+3, n+4) für die Uplink-Übertragung umfasst ist.

10. Verfahren nach seinem beliebigen der Anspruche 1 bis 8, wobei in mindestens einem der besagten mindestens ein physikalischen Downlink-Steuerkanäle Zuweisungen von mindestens zwei der besagten mindestens ein signalisierten Unterrahmen (n+3, n+4) für die Uplink-Übertragung umfasst sind.

11. Basisstation (BS1) zur Signalisierung, in physischen Downlink-Steuerkanälen in Unterrahmen (n-2...n+1) von der Basisstation (BS1) an Benutzerendgeräte (UE1, UE2), von Zuweisungen von Unterrahmen (n+2...n+5) für die Uplink-Übertragung von den Benutzerendgeräten (UE1, UE2) an die Basisstation (BS1), wobei die Zuweisungen für spezifische einzelne Unterrahmen gültig sind, wobei die Basisstation (BS1) mindestens ein Verarbeitungsmittel umfasst, welches dazu ausgelegt ist, in mindestens einem physischen Downlink-Steuerkanal in einem einzelnen Unterrahmen (n-1) Zuweisungen von mindestens einem signalisierten Unterrahmen (n+3, n+4) für die Uplink-Übertragung von mindestens einem der besagten Benutzerendgeräte (UE1, UE2) an die Basisstation (BS1) zu signalisieren, **dadurch gekennzeichnet, dass** das besagte mindestens eine Verarbeitungsmittel ausgelegt ist für
• das Signalisieren der besagten Zuweisungen in dem mindestens einen physischen Downlink-Steuerkanal in dem besagten einzelnen Unterrahmen (n-1), wenn mindestens ein fast leerer Unterrahmen (n) in der Downlink-Übertragung verwendet wird,
• und das Durchführen einer Definition des besagten mindestens einen signalisierten Unterrahmens (n+3, n+4) anhand mindestens einer Zahl, welche die Distanz zwischen dem besagten mindestens einen signalisierten Unterrahmen (n+3, n+4) und einer vorgegebenen Unterrahmen-Position anzeigt.

12. Benutzerendgerät (UE1, UE2) zum Empfangen, in physischen Downlink-Steuerkanälen in Unterrahmen (n-2...n+1) von einer Basisstation (BS1) an das Benutzerendgerät, der Signalisierung von Zuweisungen von Unterrahmen (n+2 ... n+5) für die Uplink-Übertragung von dem Benutzerendgerät (UE1, UE2) an die Basistation (BS1), wobei die Zuweisungen für spezifische einzelne Unterrahmen gültig sind, wobei das Benutzerendgerät (UE1, UE2) mindestens ein Verarbeitungsmittel umfasst, welches dazu ausgelegt ist, in mindestens einem physischen Downlink-Steuerkanal in einem einzelnen Unterrahmen (n-1) Zuweisungen von mindestens einem signalisierten Unterrahmen für die UplinkÜbertragung von dem Benutzerendgerät (UE1, UE2) an die Basisstation (BS1) zu empfangen, **dadurch gekennzeichnet, dass** das besagte mindestens eine Verarbeitungsmittel ausgelegt ist für
• den Empfang der besagten Zuweisungen in dem mindestens einen physischen Downlink-Steuerkanal in dem besagten einzelnen Unterrahmen (n-1), wenn mindestens ein fast leerer Unterrahmen (n) in der Downlink-Übertragung verwendet wird,
• und das Durchführen einer Definition des besagten mindestens einen signalisierten Unterrahmens (n+3, n+4) anhand mindestens einer Zahl, welche die Distanz wischen dem besagten mindestens einen signalisierten Unterrahmen (n+3, n+4) und einer vorgegebenen Unterrahmen-Position anzeigt.

13. Kommunikationsnetzwerk (CN) mit mindestens einer Basisstation (BS1) gemäß Anspruch 11 und mindestens einem Benutzerendgerät (UE1, UE2) gemäß Anspruch 12.

## Revendications

1. Procédé pour signaler, dans des canaux physiques de commande de liaison descendante dans des sous-trames (n-2...n+1) entre une station de base (BS1) et des terminaux d'utilisateurs (UE1, UE2), des attributions de ressources de transmission de sous-trames (n+2...n+5) pour la transmission en liaison montante entre les terminaux d'utilisateurs (UE1, UE2) et la station de base (BS1), les attributions étant valides pour des sous-trames uniques spécifiques, dans lequel dans au moins un canal physique de commande de liaison descendante dans une sous-trame unique (n-1), la station de base (BS1) signale des attributions d'au moins une sous-trame signalée (n+3, n+4) pour la transmission en liaison montante entre au moins un desdits germinaux d'utilisateurs (UE1, UE2) et la station de base (BS1), **caractérisé en ce que**
• lesdites attributions sont signalées dans l'au moins un canal physique de commande de liaison descendante dans ladite sous-trame unique (n-1), si tau moins une sous-trame presque vide (n) est utilisée en liaison descendante,
• et une définition de ladite au moins une sous-trame signalée (n+3, n+4) est réalisée au moyen d'au moins un nombre indiquant la distance entre ladite au mains une sous-trame signalée (n+3, n+4) et un emplacement de sous-trame par défaut.

2. Procédé selon la revendication 1, dans lequel lesdites attributions signalées comprennent au moins un élément parmi un groupe d'attributions de blocs de ressources, des schémas de modulation et de codage, une commande de puissance d'émission pour des canaux physique partagées de liaison montante, et des identités des germinaux d'utilisateurs (UE1, UE2) auxquels la signalisation dans les canaux physiques de commande de liaison descendante est destinée.

3. Procédé selon la revendication 1, dans lequel une définition de ladite au moins une sous-trame signalée (n+3, n+4) est réalisée au moyen d'au moins un élément parmi un groupe constitué d'une règle prédéfinie connue des terminaux d'utilisateurs (UE1, UE2), d'une signalisation de liaison descendante sur une couche de commande de ressource radio, et d'une signalisation de canaux physiques de commande de liaison descendante.

4. Procédé selon la revendication 3, dans lequel la signalisation de canaux physiques de commande de liaison descendante comprend un champ utilisé pour la définition d'au moins une parmi ladite ou lesdites sous-trames signalées (n+3, n+4).

5. Procédé selon la revendication 4, dans lequel ledit champ est un champ facultatif redéfini utilisé pour la définition d'au moins une parmi ladite ou lesdites sous-trames signalées (n+3, n+4).

6. Procédé selon la revendication 4 ou 5, dans lequel la signalisation de canaux physiques de commande de liaison descendante est réalisée en utilisant un message d'informations de commande de liaison descendante au format DCl 0.

7. Procédé selon la revendication 5, dans lequel ledit champ facultatif redéfini est un champ parmi un groupe constitué d'un champ d'indicateur de porteuse et d'un champ d'indice de sous-trame de liaison descendante.

8. Procédé selon l'une quelconque des revendications précédentes, dans lequel au moins deux desdits germinaux d'utilisateurs (UE1, UE2) sont planifiés dans un ordre d'un niveau d'agrégation desdits au moins deux parmi lesdits terminaux d'utilisateurs (UE1, UE2).

9. Procédé selon l'une quelconque des revendications précédentes, dans lequel dans chacun du ou des canaux physiques de commande de liaison descendante, une attribution d'une seule parmi ladite ou lesdites sous-trames signalées (n+3, n+4) pour la transmission en liaison montante est comprise.

10. Procédé selon l'une quelconque des revendications 1 à 8, dans lequel dans au moins un du ou des canaux physiques de commande de liaison descendante, des attributions d'au moins deux parmi ladite ou lesdites sous-trames signalées (n+3, n+4) pour la transmission en liaison montante, sont comprises.

11. Station de base (BS1) pour la signalisation dans des canaux physiques de commande de liaison descendante dans des sous-trames (n-2...n+1) entre la station de base (BS1) et des germinaux d'utilisateurs (UE1, UE2) des attributions de sous-trames (n+2...n+5) pour la transmission en liaison montante entre les terminaux d'utilisateurs (UE1, UE2) et la station de base (BS1), les attributions étant valides pour des sous-trames uniques spécifiques, la station de base (BS1) comprenant au moins un moyen de traitement qui est adapté pour signaler dans au moins un canal physique de commande de liaison descendante dans une sous-trame unique (n-1) des attributions d'au moins une sous-trame signalée (n+3, n+4) pour la transmission en liaison montante entre au moins un desdits terminaux d'utilisateurs (UE1, UE2) et la station de base (BS1), **caractérisée en ce que** ledit au moins un moyen de traitement est adapté pour
• signaler lesdites attributions dans l'au moins un canal physique de commande de liaison descendante dans ladite sous-trame unique (n-1), si au moins une sous-trame presque vide (n) est utilisée en liaison descendante,
• et réaliser une définition de ladite au moins une sous-trame signalée (n+3, n+4) au moyen d'au moins un nombre indiquant la distance entre ladite au moins une sous-trame signalée (n+3, n+4) et un emplacement de sous-trame par défaut.

12. Terminal d'utilisateur (UE1, UE2) pour recevoir dans des canaux physiques de commande de liaison descendante dans des sous-trames (n-2...n+1) entre une station de (BS1) et le terminal d'utilisateur (UE1, UE2) la signalisation d'attributions de sous-trames (n+2...n+5) pour la transmission en liaison montante entre le terminal d'utilisateur (UE1, UE2) et la station de base (BS1), les attributions étant valides pour des sous-trames uniques spécifiques, le terminal d'utilisateur (UE1, UE2) comprenant au moins une moyen de traitement qui est adapté pour recevoir dans au moins un canal physique de commande de liaison descendante dans une sous-trame unique (n-1) des attributions d'au moins une sous-trame signalée pour la transmission en liaison montante entre le terminal d'utilisateur (UE1, UE2) et la station de base (BS1), **caractérisé en ce que** ledit au moins un moyen de traitement est adapté pour
• recevoir lesdites attributions dans l'au moins un canal physique de commande de liaison descendante dans ladite sous-trame unique (n-1), si au moins une sous-trame presque vide (n) est utilisée en liaison descendante,
• et réaliser une définition de ladite au moins une sous-trame signalée (n+3, n+4) au moyen d'au moins un nombre indiquant la distance entre ladite au moins une sous-trame signalée (n+3, n+4) et un emplacement de sous-trame par défaut.

13. Réseau de communication (CN) comprenant au moins une station de base (BS1) selon la revendication 11, et au moins un terminal d'utilisateur (UE1, UE2) selon la revendication 12.
